# EUROPEAN PATENT SPECIFICATION

(11) **EP 2 369 822 B1**
(45) Date of publication and mention of the grant of the patent: **21.03.2018**
(21) Application number: 09822995.8
(22) Date of filing: 22.04.2009
(51) Int. Cl.: G06Q 30/06, H04M 15/00

(54) **TESTING METHOD AND TESTING DEVICE OF MONTHLY PAYMENT CHARGE**
TESTVERFAHREN UND TESTGERÄT FÜR MONATLICHE ZAHLUNGSBELASTUNG
PROCÉDÉ ET DISPOSITIF DE TEST D'UN MONTANT DE FACTURATION MENSUELLE

(30) Priority: 27.10.2008 CN 200810171224
(43) Date of publication of application: 28.09.2011
(73) Proprietor: Huawei Technologies Co., Ltd., Longgang District Shenzhen, Guangdong 518129 (CN)
(72) Inventor: WANG, Shijun, Guangdong 518129 (CN); PENG, Yunfeng, Guangdong 518129 (CN)
(74) Representative: Isarpatent
(86) International application number: PCT/CN2009/071409
(87) International publication number: WO 2010/048802

(56) References cited:
- WO-A1-01/50312
- WO-A1-2008/092345
- WO-A1-2009/018736
- WO-A2-02/03336
- CN-A- 1 822 617
- CN-A- 101 014 061
- DE-A1- 10 160 957
- US-B1- 7 085 360
- XU WENJUN ET AL.: 'Mobile increment business lecture course, the second course, real-time agile charge based on intelligent network.' CHINA NEW TELECOMMUNICATIONS October 2007, pages 77 - 81, XP008139972

## Description

### FIELD OF THE TECHNOLOGY

The present invention relates to the field of online charging technology, and more particularly to a testing method and a testing device of a monthly charge.

### BACKGROUND OF THE INVENTION

With more and more commercial sites of an Online Charge System (OCS), users can experience the online charging capability of the OCS. However, how to effectively test the correctness of charges before formal use of users has always been an important and difficult point. There are two types of charging: one is usage-based charging, which is either session triggered (for example, making a call) or event triggered (for example, sending a short message), and the other is rental charging, that is, monthly charge is made (for example, a monthly fee of RMB 80 Yuan is collected at the beginning of a month with a reward of 100 Short Message Service (SMS) messages). The rental charging cannot be triggered at any time, and must be performed on a monthly date.

Before a product needing be charged monthly is formally put into use, a test of the monthly charge needs to be performed. An existing test of the monthly charge needs to be accomplished in a mirrored environment corresponding to a commercial site, and then the product needing be charged is imported to the commercial site and applied to formal users. Moreover, the existing test of the monthly charge in the mirrored environment is performed on a test user by the following method: selecting a user on which a monthly charge test needs to be performed, importing a month of the monthly charge test, and product data and all user's subscription data on the product needing be charged (for example, a subscription relation between the user and the product needing be charged, and extended attributes), and performing the monthly charge test according to the series of imported data, that is, collecting a rental, giving a reward of free resources, and implementing an installment rebate plan; and outputting a charge test result. For example, if the imported test month is August, the product data of a product B needing be charged and subscribed to by a user A is a monthly rental with a reward of short messages, and the subscription data is a monthly rental of RMB 20 Yuan with a reward of 130 short messages, the charge of the user A in August is tested according to the imported subscription data and product data.

In the process of practicing and researching the prior art, the inventor of the present invention finds that the existing testing method of the monthly charge at least has one of the following problems.

In the existing test of the monthly charge, the month on which the monthly charge test is performed and the subscription data of the user need to be imported in each test, so that the testing procedure is complex. In addition, the existing test of the monthly charge is performed and completed in mirrored environments before application to commercial sites, so that a set of specialized test environments need to be provided and maintained. Moreover, the existing test of the monthly charge has a slow response to demands, and any changes to charges need to be made by the research and development team in the mirrored environments, thus failing to respond to operator demands rapidly. WO 02/03336 A2 relates to as system and method for automatic billing-system verification.

### SUMMARY

The invention is defined by the appended claims. Disclosed is a testing method and a testing device of a monthly charge, which can simplify the testing procedure of the monthly charge.

Disclosed is a testing method of a monthly charge, which includes the following steps.

One user which has subscribed to a product needing be charged is selected.

User's subscription data on the product needing be charged is obtained according to the user information.

A monthly charge of the user is tested according to the subscription data, and a charge test result is obtained.

Disclosed is a testing device of a monthly charge, which includes a user selecting unit, a subscription data obtaining unit, and a testing unit.

The user selecting unit is configured to select one user which has subscribed to a product needing be charged.

The subscription data obtaining unit is configured to obtain, according to the user information, user's subscription data on the product needing be charged.

The testing unit is configured to test a monthly charge of the user according to the subscription data obtained by the subscription data obtaining unit, and obtain a charge test result.

As can be seen from the testing method and the testing device of the monthly charge according to the present invention, in the present invention, as long as one user which has subscribed to a product needing be charged is selected, user's subscription data on the product needing be charged is obtained according to the user information, and then a monthly charge of the user is tested, and a charge test result is obtained. As compared with the prior art in which the month and subscription data are imported for each test, in the present invention, as long as one user which has subscribed to a product needing be charged is selected in each test, the system can obtain all subscription data of the user according to the user information, so that the subscription data does not need to be imported and the testing procedure is simplified. In addition, since commercial sites have correspondence information of users and products needing to charged stored therein, the technical features of the test of the monthly charge in the present invention determine that the test can be performed on the commercial sites by employing the method in the present invention, which responds to the operator demands rapidly as compared with the prior art in which the test can only be performed in mirrored environments before application to commercial sites.

### BRIEF DESCRIPTION OF THE DRAWINGS

To illustrate the technical solution according to the embodiments of the present invention or in the prior art more clearly, the accompanying drawings for describing the embodiments or the prior art are given briefly below. Apparently, the accompanying drawings in the following description are only some embodiments of the present invention, and persons of ordinary skill in the art can derive other drawings from the accompanying drawings without creative efforts.
FIG. 1 shows a testing method of a monthly charge according to a first embodiment;
FIG. 2 shows a testing method of a monthly charge according to a second embodiment;
FIG. 3 shows a testing method of a monthly charge according to a third embodiment;
FIG. 4 shows a testing method of a monthly charge according to a fourth embodiment;
FIG. 5 shows a testing method of a monthly charge according to a fifth embodiment;
FIG. 6 shows a testing device of a monthly charge according to a first device embodiment;
FIG. 7 shows a testing device of a monthly charge according to a second device embodiment; and
FIG. 8 shows a testing device of a monthly charge according to a third device embodiment.

### DETAILED DESCRIPTION OF THE EMBODIMENTS

The technical solution of the present invention will be clearly and completely described in the following with reference to the accompanying drawings. It is obvious that the embodiments to be described are only a part rather than all of the embodiments of the present invention. All other embodiments derived by persons skilled in the art based on the embodiments of the present invention without creative efforts shall fall within the protection scope of the present invention.

### Embodiment 1

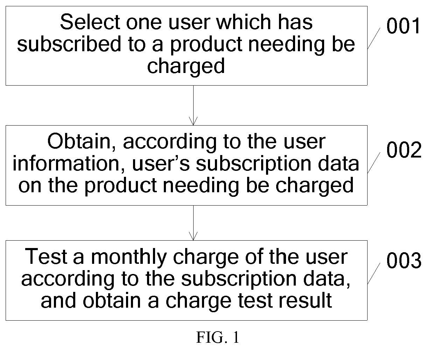

A testing method of a monthly charge is used for testing a monthly charge of a user of a product needing be charged. A flow chart of the method is shown in FIG. 1, which includes the following steps.

In step 001, one user which has subscribed to a product needing be charged is selected.

It should be understood that, each product needing be charged needs to be tested before being applied to formal users, a test user can order an unreleased product needing be charged, and the product needing be charged can be released, that is, the product needing be charged can be applied to formal users, after the test of the monthly charge is performed on a commercial site. In this embodiment, the monthly charge may not be tested through a mirrored environment corresponding to the commercial site.

In step 002, user's subscription data on the product needing be charged is obtained according to the user information.

Herein, the user information refers to information that can uniquely identify the user, for example, an account number or an identity, and the subscription data includes relevant data used in the test of the monthly charge such as information about a subscription relation between the product needing be charged and the user and extended attribute data of the product needing be charged. In this embodiment, information about a corresponding relation between the user information and the subscription data is stored in the commercial site, for example, a user with an account number of A is corresponding to a product needing be charged B, and the subscription data is a monthly rental of RMB 20 Yuan with a reward of 130 short messages. In this way, the subscription data can be obtained according to the user information.

In step 003, a monthly charge of the user is tested according to the subscription data, and a charge test result is obtained.

It should be understood that, a monthly charge test of a charge may include: calculation of a rental, calculation of discounts, implementation of installment rebate, and handling of history defaulting, and so on, and accordingly, the obtained charge test result includes a rental calculation result, a balance account book (including multiple types such as cash and free resources) and an accumulated point amount before and after the monthly charge test is performed on the test user, and so on.

In this embodiment, as long as one user which has subscribed to a product needing be charged is selected, user's subscription data on the product needing be charged is obtained according to the user information, and then a monthly charge of the user is tested, and a charge test result is obtained. As compared with the prior art in which the month and subscription data are imported for each test, in the present invention, as long as one user which has subscribed to a product needing be charged is selected in each test, the system can obtain all subscription data of the user according to the user information, so that the subscription data does not need to be imported and the testing procedure is simplified. In addition, since commercial sites have correspondence information of users and products needing be charged stored therein, the technical features of the test of the monthly charge in the present invention determine that the test can be performed on the commercial sites by employing the method in the present invention, and the method according to the embodiment of the present invention responds to the operator demands rapidly as compared with the prior art in which the test can only be performed in mirrored environments before application to commercial sites.

### Embodiment 2

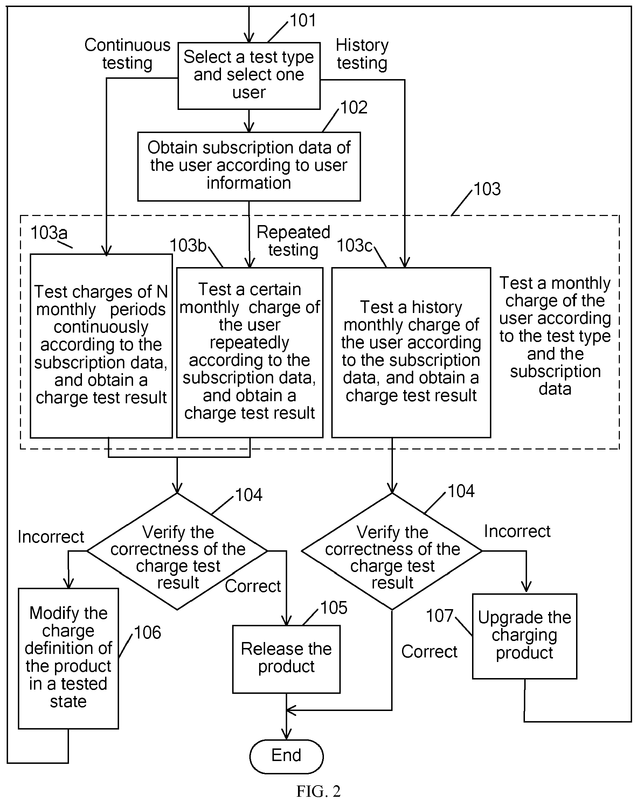

A testing method of a monthly charge is used for testing a monthly charge of a user of a product needing be charged. A flow chart of the method is shown in FIG. 2, which includes the following steps.

In step 101, a test type of a monthly charge is selected and one user which has subscribed to a product needing be charged is selected.

When the monthly charge is tested, a monthly charge of a test user which has subscribed to a certain product needing be charged may be tested for the product needing be charged. A product needing be charged in a defined state (in the creation process) or a product needing be charged that is released (already applied to formal users) may be tested. Thus, the test type of the test on the monthly charge includes: continuous testing, repeated testing, and history testing. Continuous testing refers to testing the charging condition of rentals of N continuous monthly charge periods of a user; repeated testing refers to repeatedly testing the rental collection condition of a certain monthly charge period of a user; and history testing refers to retesting the rental collection condition of a certain monthly charge period of a user that is already tested.

It should be understood that, the test type can be selected according to information input by the user such as a test month and a time currently displayed by the device, for example, if the information inputted by the user is August, and the time currently displayed by the device is October, the test type is selected to be history testing, and if the information input by the user is August to September, the test type is selected to be continuous testing; or the test type may also be selected according to the device's own settings, both of which do not constitute limitations to the present invention.

In step 102, subscription data of the user is obtained according to the user information.

In step 103, a monthly charge of the user is tested according to the test type and the subscription data, and a charge test result is obtained.

If the test type of the monthly charge selected above is continuous testing, step 103a is performed, in which charges of N continuous monthly charge periods of the user are tested according to the subscription data, and a charge test result is obtained; if the test type is repeated testing, step 103b is performed, in which a charge of one monthly charge period of the user is tested repeatedly according to the subscription data, and a charge test result is obtained; and if the test type is history testing, step 103c is performed, in which a history monthly charge of the user is tested according to the subscription data, and a charge test result is obtained.

Optionally, the embodiment of the present invention may further include step 104, in which, whether the charge test result is correct is to be checked, and if yes, the process may be ended or the charge test result may be output; and if not, data of the product needing be charged is adjusted, and after the adjustment, the process returns to step 101 for retest.

In this embodiment, for the charge test result under the types of continuous testing and repeated testing, the correctness of the charge test result may be checked by comparing the charge test result such as a balance account book (including multiple types such as cash and free resources) and an accumulated amount before and after the monthly charge test is performed on the test user with a preset result, and if they are consistent, the charge test result is correct. Further, if the charge test result is correct, step 105 is performed, in which the product needing be charged is released, that is, the product needing be charged is applied to formal users, which specifically is modifying the attribute of the data used in the test as releasing data; and if the charge test result is incorrect, the data of the product needing be charged can be adjusted by performing step 106, that is, modifying the charge definition of the product in a tested state, namely, modifying specific attributes of the product needing be charged, the calculation procedure, and so on, and step 101 is performed, and the product needing be charged is not released until the charge test is correct.

For the charge test result under the type of history testing, since the history test is a test performed after a product is released, the correctness of the charge test result may be checked by judging whether the charge test result is correct through a difference between the charge test result and an actual consumption result of the user in the subscription data (including differences in terms of the balance account book and the accumulated amount), and if a difference exists, it is judged that the checked charge test result is incorrect, and data of the product needing be charged may be adjusted by performing step 107, that is, upgrading the product needing be charged so as to correct the charge calculation of all users which has subscribed to and using the product.

It can be seen that, in the test of the monthly charge according to this embodiment, first, a test type of the monthly charge and a user are selected, and user's subscription data on the product needing be charged is obtained according to user information; then, a monthly charge of the user is tested, and a charge test result is obtained; and finally, the correctness of the charge test result is checked. As compared with the prior art, through the method according to this embodiment, as long as a user is selected in the test, the system can obtain all subscription data according to the user information without importing the subscription data; and in the later test, one monthly charge of the user may be tested repeatedly, or N continuous monthly charges may be tested, or a history monthly charge of the user may be tested according to the test type without importing monthly payment data for each test, which simplifies the testing procedure and ensures the correctness of the released product needing be charged.

### Embodiment 3

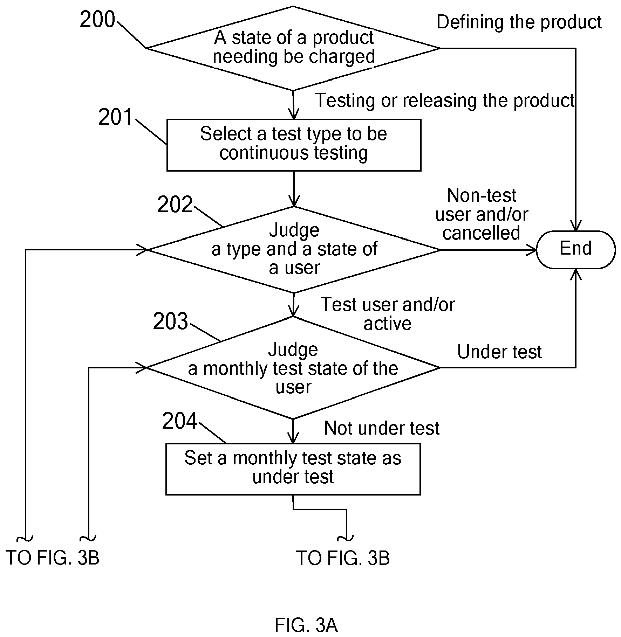

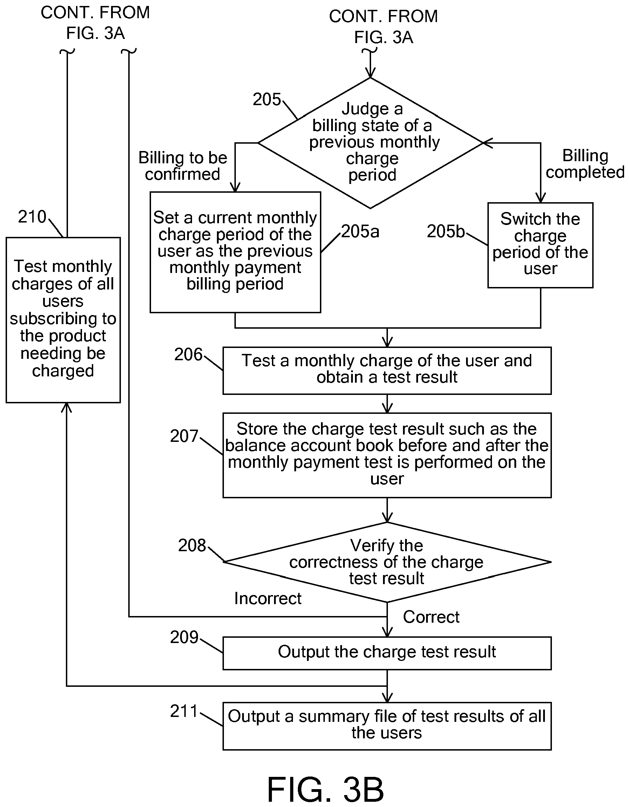

A testing method of a monthly charge is provided. This embodiment relates to a method in which the test type is continuous testing, which mainly tests the charging condition of rentals of N continuous monthly charge periods for a certain product, and in this embodiment, steps are performed on a commercial site. A flow chart of the method is shown in FIG. 3, which includes the following steps.

In step 200, a state of a product needing be charged is judged.

In this embodiment, by taking a certain product needing be charged as an example, a monthly charge of a user which has subscribed to the product needing be charged is tested. First, data of the product needing be charged (attribute data of the product needing be charged) needs to be obtained, and it is judged whether the state of the product needing be charged allows the test, and if it is in a defined state, that is, in the creation process of the product needing be charged, the process is ended, and if it is in a tested or released state, the following testing steps are performed.

In step 201, a test type of the monthly charge is selected to be continuous testing.

In step 202, a type and a state of a user are judged.

One user which has subscribed to the product needing be charged is selected, and a type and a state of the user are judged, and if the user is not of a type of test users, the test is not allowed; if the state of the user is cancelled, the test is not allowed; and if the user is a test user and is in an active state, step 203 can be performed.

In step 203, a monthly charge test state of the user is judged.

If the user is in a monthly charge test, the test is not allowed; and if the user is not in a monthly charge test, step 204 can be performed.

In step 204, a current monthly charge test state of the user is set as under test.

In step 205, user's subscription data on the product needing be charged is obtained, and since the test type selected in step 201 is continuous testing, a billing state of a previous monthly charge period, that is, the rental calculation condition of a previous monthly charge period, of the user is judged.

Before the billing state of the previous monthly charge period of the user is judged, the user's subscription data on the product needing be charged needs to be obtained. In this embodiment, the subscription data is obtained by searching for the user's subscription data on the product needing be charged that is stored in the commercial site according to user information (for example, an account number or an identity) of the user selected in step 202, so as to judge the specific monthly payment condition of the product subscribed to by the test user. For example, if product data of a certain product A needing be charged is collecting a monthly rental with a reward of short messages, and subscription data of a user B which has subscribed to the product A needing be charged is a monthly rental of RMB 20 Yuan with a reward of 130 short messages and a monthly charge date being the fifth day of each month, the subscription data can be found in the commercial site according to identification information of the user B.

The previous monthly charge period of the user may be judged according to a time displayed by the system. If the displayed system time is October, the previous monthly charge period of the user is September. If it is judged that the billing state of the previous monthly charge period of the user is billing to be confirmed, that is, the rental collection of the previous monthly charge period is not completed, step 205a is performed, in which a current monthly charge period of the user is set as the previous monthly charge period of the user; otherwise, step 205b can be performed, that is, the charge period of the user is switched to another monthly charge period of the user. Herein, the charge period switching not only refers to switching of a monthly charge date of the user, but also includes contents such as switching of corresponding accumulated customer amount, accumulated user amount, and accumulated account amount, processing of user defaulting information, and collection of periodic transaction events.

In step 206, a charge of the previous monthly charge period of the user in step 205a or a charge of the switched charge period in step 205b is tested according to the subscription data, and a charge test result is obtained.

The test of the monthly charge includes: first, a rental and discounts are calculated; then, the amount of the user is deducted according to a calculation result, if the current balance is not enough to deduct the rental, the user is recorded as a defaulting user, and retry is made in the subsequent process, and the execution condition of periodic transaction events is updated; and finally, a charge test result such as a balance account book (including multiple types such as cash and free resources) and an accumulated amount before and after the monthly charge test is performed on the user is calculated.

In step 207, the charge test result such as the balance account book (including multiple types such as cash and free resources) and the accumulated amount before and after the monthly charge test is performed on the user that is obtained by test is stored.

In step 208, it is checked whether the charge test result is correct, and if not, data of the product needing be charged is adjusted, and the process returns to step 203.

In this embodiment, the correctness of the charge test result is checked by comparing the charge test result such as the balance or free resources before and after the test that is stored in step 207 with a preset result, and if they are not consistent, the result of the test of the monthly charge is incorrect, and the charge definition of the product in the tested state may be modified and the process may return to step 203; and if they are consistent, the current monthly charge test state of the user is set as test completed. If the balance before and after the test in the obtained charge test result is 10, and the preset result is 20, an error occurs in the data of the product needing be charged which needs to be modified.

After step 208, step 209 may further be performed to output the charge test result, in which the charge test result stored in step 207 may be output, and the content may include the test user, the monthly charge date, the test time, the system time, the product, the rental amount, the reward charge, and the like. Further, the monthly charge test state of the user may be set as test completed.

In step 210, monthly charges of all users which have subscribed to the product needing be charged are tested cyclically.

It is judged whether the monthly charges of all the users of the product needing be charged are tested, and if yes, step 211 is performed; and if not, the process returns to step 202, another user which has subscribed to the product needing be charged is selected, the another user's subscription data is obtained, a monthly charge of the another user which has subscribed to the product needing be charged is tested according to the test type and the subscription data, and the correctness of a result of the test of the monthly charge of the another user is checked.

In this way, the testing process is further simplified. In the prior art, for the test of each user, data of a product needing be charged and subscribed to by the user and subscription data need to be configured, while in the present invention, when monthly charges of users which has subscribed to the same product needing be charged are tested, data of the product needing be charged needs to be imported only in the test of the first user, and the data of the product needing be charged does not need to be imported in the test of charges of other users, so that the testing process is simplified.

In step 211, a summary file of test results of all the users is output, which includes information about which users have correct charge test results and which users have incorrect charge test results.

In this embodiment, charges of N continuous monthly charge dates of multiple test users are tested, and the correctness of the N monthly charges is checked, and product data is released if the charges are correct.

### Embodiment 4

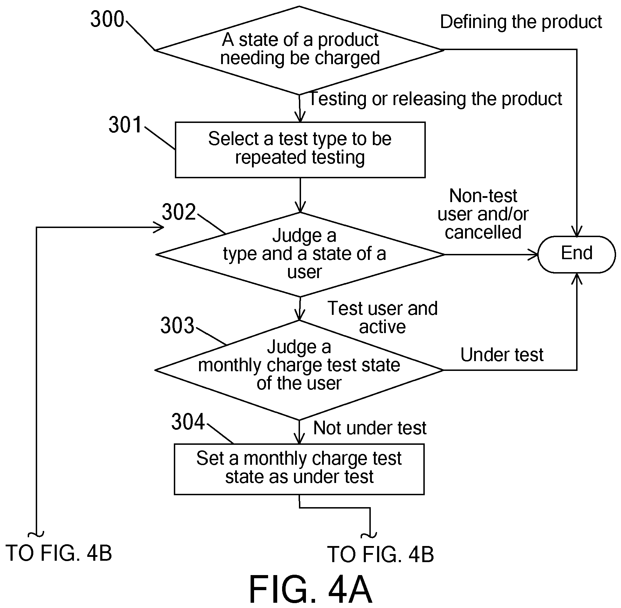

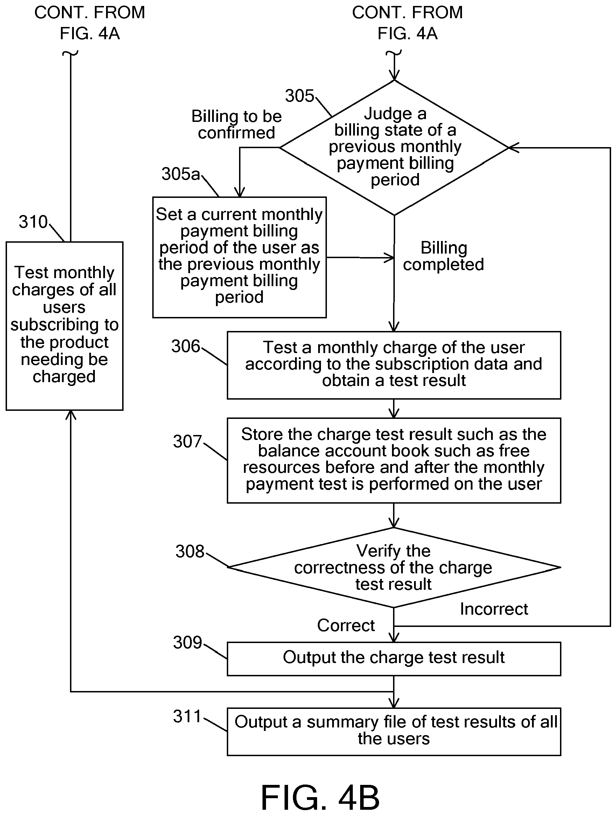

A testing method of a monthly charge is provided. This embodiment relates to a method in which the test type is repeated testing, which mainly tests the collection condition of a rental of a certain monthly charge period for a certain product. A flow chart of the method is shown in FIG. 4, which includes the following steps.

In step 300, a state of a product needing be charged is judged.

In this embodiment, by taking a certain product needing be charged as an example, a monthly charge of a user which has subscribed to the product needing be charged is tested. First, data of the product needing be charged is needed, and it is judged whether the state of the product needing be charged allows the test, and if it is in a defined state, the process is ended, and if it is in a tested or released state, the following testing steps are performed.

In step 301, a test type of the monthly charge is selected to be repeated testing.

In step 302, a type and a state of a user are judged.

One user which has subscribed to the product needing be charged is selected, and a type and a state of the user are judged, and if the user is not of a type of test users, the test is not allowed; if the state of the user is cancelled, the test is not allowed; and if the user is a test user and is in an active state, step 303 can be performed.

In step 303, a monthly charge test state of the user is judged.

If the user is in a monthly charge test, the test is not allowed; and if the user is not in a monthly charge test, step 304 can be performed.

In step 304, a current monthly charge test state of the user is set as under test.

In step 305, user's subscription data on the product needing be charged is obtained, and since the test type selected in step 301 is continuous testing, a billing state of a previous monthly charge period of the user is judged.

Before the billing state of the previous monthly charge period is judged, the user's subscription data on the product needing be charged needs to be obtained. In this embodiment, the subscription data is obtained by searching, according to user information (for example, an account number or an identity) of the user selected in step 302, for the user's subscription data on the product needing be charged that is stored in the commercial site, so as to judge the specific monthly payment condition of the product subscribed to by the test user, which is as described in the third embodiment, and will not be described herein again. If it is judged that the billing state of the previous monthly charge period is billing to be confirmed, step 305a can be performed, that is, a current monthly charge period of the user is set as the previous monthly charge period.

In step 306, if it is judged that the billing state of the previous monthly charge period is billing completed in step 305, a charge of the previous monthly charge period is tested according to the subscription data, or a charge of the current monthly charge period of the user set in step 305a is tested according to the subscription data, and a charge test result is obtained.

In step 307, the charge test result such as the balance account book (including multiple types such as cash and free resources) and the accumulated amount before and after the monthly charge test is performed on the user that is calculated is stored.

In step 308, it is checked whether the charge test result is correct, and if not, data of the product needing be charged is adjusted, and the process returns to step 305 for retest.

In this embodiment, the correctness of the charge test result is checked by comparing a difference of balances or free resources before and after the test with a preset result, and if they are not consistent, the result of the test of the monthly charge is incorrect, and the charge definition of the product in the tested state may be modified and the process may return to step 305; and if they are consistent, the current monthly charge test state of the user may be set as test completed.

After step 308, step 309 may further be performed to output the charge test result, that is, the charge test result in step 306 is output, and the verification result in step 308 may also be output, and the content may include the test user, the monthly charge date, the test time, the system time, the product, the rental amount, the reward charge, and the like. Further, the monthly charge test state of the user may be set as test completed.

In step 310, monthly charges of all users which has subscribed to the product needing be charged are tested cyclically.

It is judged whether the monthly charges of all the users of the product needing be charged are tested, and if yes, step 311 is performed; and if not, the process returns to step 302, another user which has subscribed to the product needing be charged is selected, a test type of the monthly charge is selected, the another user's subscription data on the product needing be charged is obtained, a monthly charge of the another user which has subscribed to the product needing be charged is tested according to the test type and the subscription data, and the correctness of a result of the test of the monthly charge of the another user is checked.

In step 311, a summary file of test results of all the users is output.

The difference between this embodiment and the second embodiment lies in that, for repeated testing, the monthly charge date is not switched, a certain monthly charge is tested repeatedly, and the correctness of the result of the test of the certain monthly charge is checked repeatedly.

### Embodiment 5

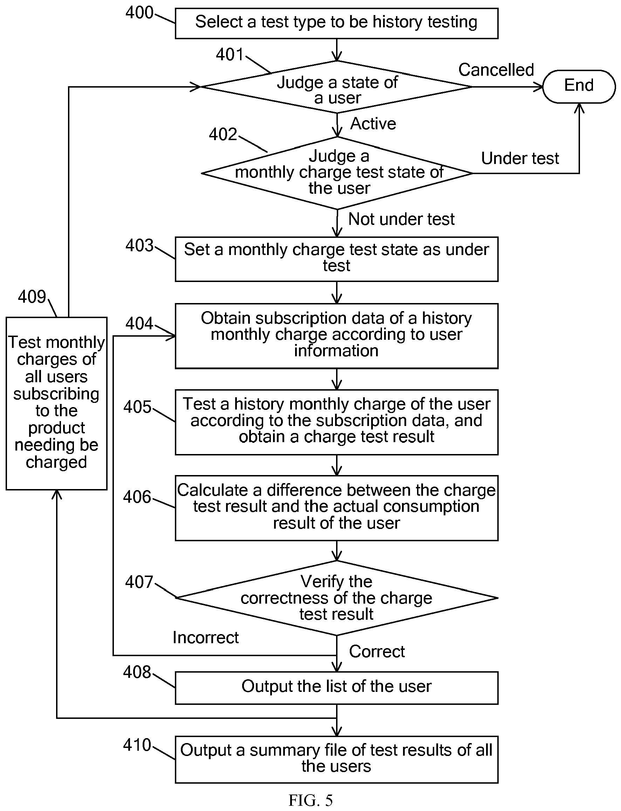

A testing method of a monthly charge is provided. This embodiment relates to a method in which the test type is history testing, and history testing refers to retesting the rental collection condition of a certain monthly charge period of a user that is already tested. A flow chart of the method is shown in FIG. 5, which includes the following steps.

In step 400, a test type of the monthly charge is selected to be history testing.

In step 401, a state of the user is judged.

It should be understood that, this embodiment relates to a test performed for a product needing be charged that is already applied to formal users (released), in which one user which has subscribed to a certain product needing be charged is selected, and if it is judged that the state of the user is cancelled, the test is not allowed; and if the user is in an active state, step 402 can be performed.

In step 402, a monthly charge test state of the user is judged.

If the user is in a monthly charge test, the test is not allowed; and if the user is not in a monthly charge test, step 403 can be performed.

In step 403, a current monthly charge test state of the user is set as under test.

In step 404, user's subscription data on the product needing be charged is obtained according to the user information.

Herein, the subscription data includes an actual consumption result of the user, the collection condition of history rentals, and so on.

In step 405, since history testing is selected in step 400, a history monthly charge of the user is tested according to the subscription data obtained in step 404, and a charge test result is obtained.

Herein, the history monthly charge refers to a charge on which a monthly charge test is already performed.

In step 406, a difference between the charge test result and the actual consumption result of the user in the subscription data (including differences in terms of the balance account book and the accumulated amount) is calculated.

In step 407, it is checked whether the charge test result is correct, and if not, data of the product needing be charged is adjusted, and the process returns to step 404.

In this embodiment, the correctness of the charge test result is checked by judgment through a difference between the charge test result stored in step 406 and the actual consumption result of the user in the subscription data, and if a difference exists, the charge test result is incorrect, the product needing be charged may be upgraded, and the process returns to step 404; and if the difference is 0, the current monthly charge test state of the user may be set as test completed. If a monthly rental in the charge test result is 10, and the actual consumption result of the user is 30, the charge test result is incorrect, and attribute data of the product needing be charged needs to be modified.

After step 407, step 408 may further be performed to output the charge test result, in which the result of the test of the monthly charge in step 405 is output, and the verification result in step 407 may also be output, and the content may include the test user, the monthly charge date, the test time, the system time, the product, the rental amount, the reward charge, and the like. Further, the monthly charge test state of the user may be set as test completed.

In step 409, monthly charges of all users which have subscribed to the product needing be charged are tested cyclically.

It is judged whether the monthly charges of all the users of the product needing be charged are tested, and if yes, step 410 is performed; and if not, the process returns to step 401, another user which has subscribed to the product needing be charged is selected, the another user's subscription data is obtained, a monthly charge of the another user which has subscribed to the product needing be charged is tested according to the test type and the subscription data, so as to check the correctness of a result of the test of the monthly charge of the another user.

In step 410, a summary file of test results of all the users is output, which includes information about which users have correct charge test results and which users have incorrect charge test results.

In this embodiment, charges of history monthly charge dates of multiple users that order the product needing be charged are tested, and test results are checked.

### Device embodiment 1

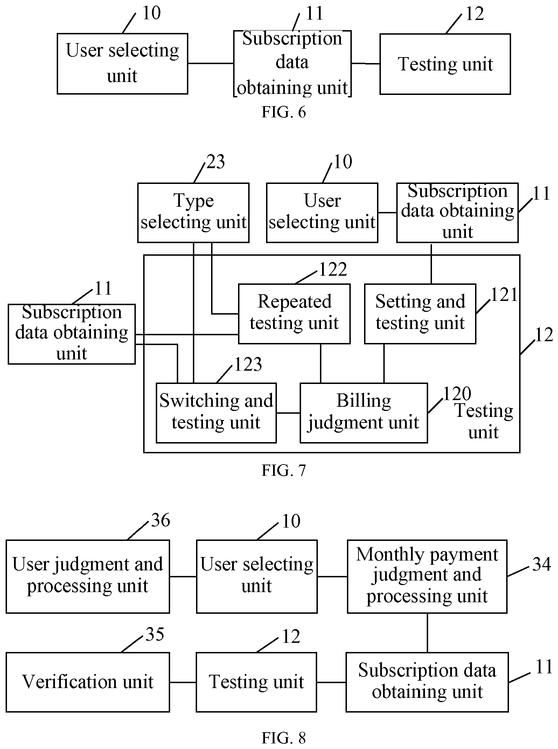

A schematic view illustrating a logical structure of a testing device of a monthly charge is shown in FIG. 6, which includes a user selecting unit 10, a subscription data obtaining unit 11, and a testing unit 12.

The user selecting unit 10 is configured to select one user which has subscribed to a product needing be charged.

The subscription data obtaining unit 11 is configured to obtain user's subscription data on the product needing be charged according to the user information.

The testing unit 12 is configured to test a monthly charge of the user according to the subscription data obtained by the subscription data obtaining unit 11, and obtain a charge test result.

It can be seen that, in the testing device of the monthly charge according to the present invention, the subscription data obtaining unit 11 can obtain subscription data according to user information of a user selected by the user selecting unit 10, and a monthly charge of the user is tested by the testing unit 12 and a charge test result is obtained. In this way, as compared with the prior art, as long as the testing device of the monthly charge according to the present invention selects a user in the test, the testing device of the monthly charge can obtain all subscription data according to user information without importing the subscription data for the test, which simplifies the testing procedure.

### Device embodiment 2

A testing device of a monthly charge is provided. The difference between the testing device of the monthly charge provided in this embodiment and that in the first embodiment lies in that, in this embodiment, the testing unit 12 is fractionalized and a type selecting unit 23 is added. A schematic view illustrating a logical structure of the device is shown in FIG. 7.

The type selecting unit 23 is configured to select a test type of the monthly charge to be continuous testing, repeated testing, or history testing.

The testing unit 12 tests the monthly charge of the user according to the subscription data obtained by the subscription data obtaining unit 11 and the type of the monthly charge test selected by the type selecting unit 23, and obtains a charge test result. The testing unit 12 may include a billing judgment unit 120, a setting and testing unit 121, a repeated testing unit 122, and a switching and testing unit 123.

The billing judgment unit 120 is configured to judge a billing state of a previous monthly charge period of the user when the test type selected by the type selecting unit 25 is continuous testing or repeated testing.

The setting and testing unit 121 is configured to set a current monthly charge period of the user as the previous monthly charge period of the user, and test a charge of the previous monthly charge period according to the subscription data when the billing judgment unit 120 judges that the billing state of the previous monthly charge period of the user is billing to be confirmed.

The repeated testing unit 122 is configured to test the charge of the previous monthly charge period repeatedly according to the subscription data when the billing judgment unit 120 judges that the billing state of the previous monthly charge period of the user is billing completed and the test type of the monthly charge selected by the type selecting unit 25 is repeated testing.

The switching and testing unit 123 is configured to switch the charge period of the user and test a charge of the switched charge period of the user according to the subscription data when the billing judgment unit 120 judges that the billing state of the previous monthly charge period of the user is billing completed and the test type of the monthly charge selected by the type selecting unit 25 is continuous testing.

In this embodiment, the testing unit 12 is fractionalized, so that one monthly charge of a user can be tested repeatedly or N continuous monthly charges can be tested.

### Device embodiment 3

A testing device of a monthly charge is provided. The difference between the testing device of the monthly charge provided in this embodiment and that in the first embodiment lies in that, in this embodiment, a monthly payment judgment and processing unit 34, a checking unit 35, and a user judgment and processing unit 36 are added. A schematic view illustrating a logical structure of the device is shown in FIG. 8.

The monthly payment judgment and processing unit 34 is configured to judge whether the user is in a monthly charge test, and if not, set a monthly charge test state of the user as under test, and notify the subscription data obtaining unit 11 of obtaining the subscription data of the user.

The checking unit 35 is configured to check whether the charge test result obtained by the testing unit 12 is correct, and if not, adjust data of the product needing be charged.

The user judgment and processing unit 36 is configured to judge whether monthly charges of all users which have subscribed to the product needing be charged are tested, and if yes, output a summary file of the monthly charge tests of the product needing be charged; and if not, notify the user selecting unit 10 of selecting another user which has subscribed to the product needing be charged, and notify the subscription data obtaining unit 11 of obtaining the another user's subscription data on the product needing be charged.

In this embodiment, the correctness of the charge test result can be checked by the checking unit 35, and if the result is incorrect, data of the product needing be charged is adjusted before retest, which ensures the correctness of the released product needing be charged.

As can be seen from the testing method and the testing device of the monthly charge according to the present invention, in the embodiments of the present invention, as long as one user which has subscribed to a product needing be charged is selected, user's subscription data on the product needing be charged is obtained according to the user information, and then a monthly charge of the user is tested, and a charge test result is obtained. As compared with the prior art in which the month and subscription data are imported for each test, in the present invention, as long as one user which has subscribed to a product needing be charged is selected in each test, the system can obtain all subscription data of the user according to the user information, so that the subscription data does not need to be imported and the testing procedure is simplified. In addition, since commercial sites have correspondence information of users and products needing be charged stored therein, the technical features of the test of the monthly charge in the present invention determine that the test can be performed on the commercial sites by employing the method in the present invention, which responds to the operator demands rapidly as compared with the prior art in which the test can only be performed in mirrored environments before application to commercial sites.

Through the descriptions of the preceding embodiments, persons skilled in the art may understand that the embodiments may be implemented by software and a necessary universal hardware platform or by hardware. Based on such understandings, the above technical solution or the part that makes contributions to the prior art can be substantially embodied in the form of a software product. The computer software product may be stored in a computer readable storage medium such as a ROM/RAM, a magnetic disk or an optical disk, and contain several instructions to instruct a computer device (for example, a personal computer, a server, or a network device) to perform the method described in the embodiments of the present invention or in some parts of the embodiments.

The testing method and the testing device of the monthly charge according to the embodiments of the present invention are described in detail above. Therefore, the specification shall not be construed as a limit to the present invention, as long as it does not depart from the scope of the invention as it is depicted in the appended claims.

## Claims

1. A computer-implemented testing method of a monthly charge for a product for which a user has a subscription, comprising:
selecting (001) one user which has subscribed to a product needing to be charged;
obtaining (002), according to the user information, user's subscription data on the product needing to be charged, wherein the subscription data provides information about the subscription relation between the product needing to be charged and the user; and
testing (003) the monthly charge of the user according to the subscription data, and obtaining a charge test result;
wherein before the testing (003) the monthly charge of the user according to the subscription data, the method further comprises: selecting a test type of the monthly charge to be continuous testing, repeated testing, or history testing; and
the testing (003) the monthly charge of the user is specifically testing the monthly charge of the user according to the test type and the subscription data,
**characterized in that**
the testing (003) the monthly charge of the user according to the test type and the subscription data comprises: judging a billing state of a previous monthly charge period of the user when the test type is continuous testing or repeated testing; and
if judging that the billing state of the previous monthly charge period of the user is billing to be confirmed, setting a current monthly charge period as the previous monthly charge period, and testing a charge of the previous monthly charge period according to the subscription data,
wherein the testing (003) the monthly charge of the user according to the test type and the subscription data further comprises: if judging that the billing state of the previous monthly charge period of the user is billing completed, when the test type is continuous testing, switching the charge period of the user and testing a charge of the switched charge period of the user according to the subscription data; and
when the test type is repeated testing, testing the charge of the previous monthly charge period repeatedly according to the subscription data.

2. The method according to claim 1, further comprising: judging whether monthly charges of all users which have subscribed to the product needing to be charged are tested, and if not, selecting another user which has subscribed to the product needing to be charged, obtaining the another user's subscription data, and testing a monthly charge of the another user according to the test type and the subscription data.

3. The method according to claim 1, further comprising: checking whether the charge test result is correct, and if the charge test result is incorrect, adjusting data of the product needing to be charged.

4. The method according to claim 3, wherein the checking whether the charge test result is correct is specifically: comparing the charge test result with a preset result, and if they are consistent, judging that the charge test result is correct.

5. The method according to claim 1, wherein after the selecting (001) the one user which has subscribed to the product needing be charged, the method further comprises: judging whether the user is in a monthly charge test, and if not, setting a monthly charge test state of the user as under test, and performing the testing the monthly charge of the user according to the test type and the subscription data.

6. A testing computer device adapted to test a monthly charge for a product for which a user has a subscription, comprising:
a user selecting unit (10), configured to select one user which has subscribed to a product needing be charged;
a subscription data obtaining unit (11), configured to obtain, according to the user information, user's subscription data on the product needing to be charged; and
a testing unit (12), configured to test the monthly charge of the user according to the subscription data obtained by the subscription data obtaining unit (11), and obtain a charge test result, wherein the subscription data provides information about the subscription relation between the product needing to be charged and the user;
a type selecting unit (23), configured to select a test type of the monthly charge to be continuous testing, repeated testing, or history testing;
so that the testing unit (12) tests the monthly charge of the user according to the subscription data obtained by the subscription data obtaining unit and the test type selected by the type selecting unit (23), and obtains the charge test result,
**characterized by**
a checking unit (35), configured to check whether the charge test result obtained by the testing unit (12) is correct, and if not, adjust data of the product needing to be charged,
wherein the testing unit (12) comprises:
a billing judgment unit (120), configured to judge a billing state of a previous monthly charge period of the user when the test type selected by the type selecting unit is continuous testing or repeated testing; and
a setting and testing unit (121), configured to set a current monthly charge period of the user as the previous monthly charge period of the user, and test a charge of the previous monthly charge period according to the subscription data when the billing judgment unit judges that the billing state of the previous monthly charge period of the user is billing to be confirmed,
a switching and testing unit (123), configured to switch the charge period of the user and test a charge of the switched charge period of the user according to the subscription data when the billing judgment unit (120) judges that the billing state of the previous monthly charge period of the user is billing completed and the test type of the monthly charge selected by the type selecting unit is continuous testing; and
a repeated testing unit (122), configured to test the charge of the previous monthly charge period repeatedly according to the subscription data when the billing judgment unit (120) judges that the billing state of the previous monthly charge period of the user is billing completed and the test type of the monthly charge selected by the type selecting unit (23) is repeated testing.

7. The device according to claim 6, further comprising: a user judgment and processing unit (36), configured to judge whether monthly charges of all users which has subscribed to the product needing be charged are tested, and if not, notify the user selecting unit (10) of selecting another user which has subscribed to the product needing to be charged, and notify the subscription data obtaining unit (11) of obtaining the another user's subscription data on the product needing to be charged.

8. The device according to claim 6, further comprising: a monthly billing judgment and processing unit (34), configured to judge whether the user is in a test of the monthly charge, and if not, set a monthly charge test state of the user as under test, and notify the subscription data obtaining unit (11) of obtaining the subscription data of the user.

## Patentansprüche

1. Computerimplementiertes Prüfverfahren einer monatlichen Gebühr für ein Produkt, das ein Anwender abonniert hat, das Folgendes umfasst:
Auswählen (001) eines Anwenders, der ein Produkt, für das Gebühren berechnet werden sollen, abonniert hat;
Erhalten (002) gemäß den Anwenderinformationen der Abonnementdaten des Anwenders über das Produkt, für das Gebühren berechnet werden sollen, wobei die Abonnementdaten Informationen über die Abonnementbeziehung zwischen dem Produkt, für das Gebühren berechnet werden sollen, und dem Anwender bereitstellen; und
Prüfen (003) der monatlichen Gebühr des Anwenders gemäß den Abonnementdaten und Erhalten eines Gebührenprüfergebnisses;
wobei das Verfahren vor dem Prüfen (003) der monatlichen Gebühr des Anwenders gemäß den Abonnementdaten ferner Folgendes umfasst: Auswählen eines Prüftyps der monatlichen Gebühr, so dass er kontinuierliches Prüfen, wiederholtes Prüfen oder Verlaufsprüfen ist; und
das Prüfen (003) der monatlichen Gebühr des Anwenders insbesondere das Prüfen der monatlichen Gebühr des Anwenders gemäß dem Prüftyp und den Abonnementdaten ist,
**dadurch gekennzeichnet, dass**
das Prüfen (003) der monatlichen Gebühr des Anwenders gemäß dem Prüftyp und den Abonnementdaten Folgendes umfasst: Beurteilen eines Abrechnungsstatus einer früheren monatlichen Gebührenberechnungszeitspanne des Anwenders, wenn der Prüftyp kontinuierliches Prüfen oder wiederholtes Prüfen ist; und
falls beurteilt wird, dass der Abrechnungsstatus der früheren monatlichen Gebührenberechnungszeitspanne das Anwenders Abrechnung zu bestätigen ist, Einstellen einer aktuellen monatlichen Gebührenberechnungszeitspanne als die frühere monatliche Gebührenberechnungszeitspanne und Prüfen einer Gebühr der früheren monatlichen Gebührenberechnungszeitspanne gemäß den Abonnementdaten,
wobei das Prüfen (003) der monatlichen Gebühr des Anwenders gemäß dem Prüftyp und den Abonnementdaten ferner Folgendes umfasst: falls beurteilt wird, dass der Abrechnungsstatus der früheren monatlichen Gebührenberechnungszeitspanne des Anwenders Abrechnung fertiggestellt ist, wenn der Prüftyp kontinuierliches Prüfen ist, Umschalten der Gebührenberechnungszeitspanne des Anwenders und Prüfen einer Gebühr der umgeschalteten Gebührenberechnungszeitspanne des Anwenders gemäß den Abonnementdaten; und
wenn der Prüftyp wiederholtes Prüfen ist, wiederholtes Prüfen der Gebühr der früheren monatlichen Gebührenberechnungszeitspanne gemäß den Abonnementdaten.

2. Verfahren nach Anspruch 1, das ferner Folgendes umfasst: Beurteilen, ob monatliche Gebühren aller Anwender, die das Produkt abonniert haben, für das Gebühren berechnet werden sollen, geprüft sind, und falls nicht, Auswählen eines weiteren Anwenders, der das Produkt abonniert hat, für das Gebühren berechnet werden sollen, Erhalten der Abonnementdaten des weiteren Anwenders und Prüfen einer monatlichen Gebühr des weiteren Anwenders gemäß dem Prüftyp und den Abonnementdaten.

3. Verfahren nach Anspruch 1, das ferner Folgendes umfasst: Überprüfen, ob das Gebührenprüfergebnis korrekt ist, und falls das Gebührenprüfergebnis nicht korrekt ist, Anpassen der Daten des Produkts, für das Gebühren berechnet werden sollen.

4. Verfahren nach Anspruch 3, wobei das Überprüfen, ob das Gebührenprüfergebnis korrekt ist, insbesondere Folgendes ist: Vergleichen des Gebührenprüfergebnisses mit einem voreingestellten Ergebnis, und falls sie konsistent sind, Beurteilen, dass das Gebührenprüfergebnis korrekt ist.

5. Verfahren nach Anspruch 1, wobei das Verfahren nach dem Auswählen (001) des einen Anwenders, der das Produkt, für das Gebühren berechnet werden sollen, abonniert hat, ferner Folgendes umfasst: Beurteilen, ob der Anwender in einer monatlichen Gebührenprüfung ist, und falls nicht, Einstellen eines monatlichen Gebührenprüfstatus des Anwenders als in Prüfung und Ausführen der Prüfung der monatlichen Gebühr des Anwenders gemäß dem Prüftyp und den Abonnementdaten.

6. Prüfcomputervorrichtung, die ausgelegt ist, eine monatliche Gebühr für ein Produkt, das ein Anwender abonniert hat, zu prüfen, und die Folgendes umfasst:
eine Anwenderauswahleinheit (10), die konfiguriert ist, einen Anwender auszuwählen, der ein Produkt abonniert hat, für das Gebühren berechnet werden sollen;
eine Abonnementdaten-Erhalteeinheit (11), die konfiguriert ist, gemäß den Anwenderinformationen die Abonnementdaten des Anwenders über das Produkt, für das Gebühren berechnet werden sollen, zu erhalten; und
eine Prüfeinheit (12), die konfiguriert ist, die monatliche Gebühr des Anwenders gemäß den durch die Abonnementdaten-Erhalteeinheit (11) erhaltenen Abonnementdaten zu prüfen und ein Gebührenprüfergebnis zu erhalten, wobei die Abonnementdaten Informationen über die Abonnementbeziehung zwischen dem Produkt, für das Gebühren berechnet werden sollen, und dem Anwender bereitstellen;
eine Typauswahleinheit (23), die konfiguriert ist, einen Prüftyp der monatlichen Gebühr auszuwählen, so dass er kontinuierliches Prüfen, wiederholtes Prüfen oder Verlaufsprüfen ist;
so dass die Prüfeinheit (12) die monatliche Gebühr des Anwenders gemäß den durch die Abonnementdaten-Erhalteeinheit erhaltenen Abonnementdaten und dem durch die Typauswahleinheit (23) ausgewählten Prüftyp prüft und das Gebührenprüfergebnis erhält,
**gekennzeichnet durch**
eine Überprüfungseinheit (35), die konfiguriert ist zu überprüfen, ob das durch die Prüfeinheit (12) erhaltene Gebührenprüfergebnis korrekt ist, und falls nicht, Daten des Produkts, für das Gebühren berechnet werden sollen, anzupassen,
wobei die Prüfeinheit (12) Folgendes umfasst:
eine Abrechnungsbeurteilungseinheit (120), die konfiguriert ist, einen Abrechnungsstatus einer früheren monatlichen Gebührenberechnungszeitspanne des Anwenders zu beurteilen, wenn der durch die Typauswahleinheit ausgewählte Prüftyp kontinuierliches Prüfen oder wiederholtes Prüfen ist; und
eine Einstell- und Prüfeinheit (121), die konfiguriert ist, eine aktuelle monatliche Gebührenberechnungszeitspanne des Anwenders als die frühere monatliche Gebührenberechnungszeitspanne des Anwenders einzustellen und eine Gebühr der früheren monatlichen Gebührenberechnungszeitspanne gemäß den Abonnementdaten zu prüfen, wenn die Abrechnungsbeurteilungseinheit beurteilt, dass der Abrechnungsstatus der früheren monatlichen Gebührenberechnungszeitspanne des Anwenders Abrechnung zu bestätigen ist,
eine Umschalt- und Prüfeinheit (123), die konfiguriert ist, die Gebührenberechnungszeitspanne des Anwenders umzuschalten und eine Gebühr der umgeschalteten Gebührenberechnungszeitspanne des Anwenders gemäß den Abonnementdaten zu prüfen, wenn die Abrechnungsbeurteilungseinheit (120) beurteilt, dass der Abrechnungsstatus der früheren monatlichen Gebührenberechnungszeitspanne des Anwenders Abrechnung fertiggestellt ist und der durch die Typauswahleinheit ausgewählte Prüftyp der monatlichen Gebühr kontinuierliches Prüfen ist; und
eine Einheit (122) zum wiederholten Prüfen, die konfiguriert ist, die Gebühr der früheren monatlichen Gebührenberechnungszeitspanne gemäß den Abonnementdaten wiederholt zu prüfen, wenn die Abrechnungsbeurteilungseinheit (120) beurteilt, dass der Abrechnungsstatus der früheren monatlichen Gebührenberechnungszeitspanne des Anwenders Abrechnung fertiggestellt ist und der durch die Typauswahleinheit (23) ausgewählte Prüftyp der monatlichen Gebühr wiederholtes Prüfen ist.

7. Vorrichtung nach Anspruch 6, die ferner Folgendes umfasst: eine Anwenderbeurteilungs- und Verarbeitungseinheit (36), die konfiguriert ist zu beurteilen, ob monatliche Gebühren aller Anwender, die das Produkt, für das Gebühren berechnet werden sollen, abonniert haben, geprüft sind, und falls nein, der Anwenderauswahleinheit (10) das Auswählen eines weiteren Anwenders, der das Produkt, für das Gebühren berechnet werden sollen, abonniert hat, zu melden und der Abonnementdaten-Erhalteeinheit (11) das Erhalten der Abonnementdaten des weiteren Anwenders über das Produkt, für das Gebühren berechnet werden sollen, zu melden.

8. Vorrichtung nach Anspruch 6, die ferner Folgendes umfasst: eine Beurteilungs- und Verarbeitungseinheit (34) für monatliche Abrechnung, die konfiguriert ist zu beurteilen, ob der Anwender in einer Prüfung für die monatliche Gebühr ist, und falls nicht, einen Prüfstatus für monatliche Gebühr des Anwenders als in der Prüfung einzustellen und der Abonnementdaten-Erhalteeinheit (11) das Erhalten der Abonnementdaten des Anwenders zu melden.

## Revendications

1. Procédé de test mis en oeuvre par ordinateur d'un montant de frais mensuels d'un produit pour lequel un utilisateur a un abonnement, consistant :
à sélectionner (001) un utilisateur qui s'est abonné à un produit qui doit être payé ;
à obtenir (002), en fonction des informations d'utilisateur, des données d'abonnement de l'utilisateur concernant le produit qui doit être payé, dans lequel les données d'abonnement fournissent des informations concernant la relation d'abonnement entre le produit qui doit être payé et l'utilisateur ; et
à tester (003) le montant de frais mensuels de l'utilisateur en fonction des données d'abonnement et à obtenir un résultat de test de montant de frais ;
dans lequel, avant le test (003) du montant de frais mensuels de l'utilisateur en fonction des données d'abonnement, le procédé consiste en outre : à sélectionner un type de test du montant de frais mensuels de sorte à être un test continu, un test répété ou un test d'histoire ; et
le test (003) du montant de frais mensuels de l'utilisateur consiste expressément à tester le montant de frais mensuels de l'utilisateur en fonction du type de test et des données d'abonnement,
**caractérisé en ce que**
le test (003) du montant de frais mensuels de l'utilisateur en fonction du type de test et des données d'abonnement consiste : à estimer un état de facturation d'une précédente période de frais mensuels de l'utilisateur lorsque le type de test est un test continu ou un test répété ; et
s'il est estimé que l'état de facturation de la précédente période de frais mensuels de l'utilisateur est une facturation qui doit être confirmée, à définir une période de frais mensuels actuelle comme étant la précédente période de frais mensuels et à tester un montant de frais de la précédente période de frais mensuels en fonction des données d'abonnement,
dans lequel le test (003) du montant de frais mensuels de l'utilisateur en fonction du type de test et des données d'abonnement consiste en outre : s'il est estimé que l'état de facturation de la précédente période de frais mensuels de l'utilisateur est une facturation terminée, lorsque le type de test est un test continu, à changer la période de frais de l'utilisateur et à tester un montant de frais de la période de frais changée de l'utilisateur en fonction des données d'abonnement ; et
lorsque le type de test est un test répété, à tester à plusieurs reprises le montant de frais de la précédente période de frais mensuels en fonction des données d'abonnement.

2. Procédé selon la revendication 1, consistant en outre : à estimer si les montants de frais mensuels de tous les utilisateurs qui sont abonnés au produit qui doit être payé sont testés, et, si ce n'est pas le cas, à sélectionner un autre utilisateur qui s'est abonné au produit qui doit être payé, à obtenir les données d'abonnement de l'autre utilisateur et à tester un montant de frais mensuels de l'autre utilisateur en fonction du type de test et des données d'abonnement.

3. Procédé selon la revendication 1, consistant en outre : à vérifier si le résultat du test de montant de frais est correct et, si le résultat du test de montant de frais est incorrect, à ajuster des données du produit qui doit être payé.

4. Procédé selon la revendication 3, dans lequel la vérification que le résultat du test de montant de frais est correct, consiste expressément : à comparer le résultat du test de montant de frais avec un résultat prédéterminé et, s'ils sont compatibles, à estimer que le résultat du test de montant de frais est correct.

5. Procédé selon la revendication 1, dans lequel, après la sélection (001) du seul utilisateur qui s'est abonné au produit qui doit être payé, le procédé consiste en outre : à estimer si l'utilisateur est dans un test du montant de frais mensuels et, si ce n'est pas le cas, à définir un état de test du montant de frais mensuels de l'utilisateur comme étant en cours de test et à effectuer le test du montant de frais mensuels de l'utilisateur en fonction du type de test et des données d'abonnement.

6. Dispositif informatique de test conçu pour tester un montant de frais mensuels d'un produit pour lequel un utilisateur a un abonnement, comprenant :
une unité de sélection d'utilisateur (10), configurée pour sélectionner un utilisateur qui s'est abonné à un produit qui doit être payé ;
une unité d'obtention de données d'abonnement (11), configurée pour obtenir, en fonction des informations d'utilisateur, des données d'abonnement de l'utilisateur concernant le produit qui doit être payé ; et
une unité de test (12), configurée pour tester le montant de frais mensuels de l'utilisateur en fonction des données d'abonnement obtenues par l'unité d'obtention de données d'abonnement (11) et pour obtenir un résultat de test de montant de frais,
dans lequel les données d'abonnement fournissent des informations concernant la relation d'abonnement entre le produit qui doit être payé et l'utilisateur ;
une unité de sélection de type (23), configurée pour sélectionner un type de test du montant de frais mensuels de sorte à être un test continu, un test répété ou un test d'histoire ;
de telle sorte que l'unité de test (12) teste le montant de frais mensuels de l'utilisateur en fonction des données d'abonnement obtenues par l'unité d'obtention de données d'abonnement et du type de test sélectionné par l'unité de sélection de type (23) et obtient le résultat de test de montant de frais,
**caractérisé par**
une unité de vérification (35), configurée pour vérifier si le résultat du test de montant de frais obtenu par l'unité de test (12) est correct et, si ce n'est pas le cas, pour ajuster des données du produit qui doit être payé,
dans lequel l'unité de test (12) comprend :
une unité d'estimation de facturation (120), configurée pour estimer un état de facturation d'une précédente période de frais mensuels de l'utilisateur lorsque le type de test sélectionné par l'unité de sélection de type est un test continu ou un test répété ; et
une unité de détermination et de test (121), configurée pour définir une période de frais mensuels actuelle de l'utilisateur comme étant la précédente période de frais mensuels de l'utilisateur et pour tester un montant de frais de la précédente période de frais mensuels en fonction des données d'abonnement lorsque l'unité d'estimation de facturation estime que l'état de facturation de la précédente période de frais mensuels de l'utilisateur est une facturation qui doit être confirmée,
une unité de changement et de test (123), configurée pour changer la période de frais de l'utilisateur et pour tester un montant de frais de la période de frais changée de l'utilisateur en fonction des données d'abonnement lorsque l'unité d'estimation de facturation (120) estime que l'état de facturation de la précédente période de frais mensuels de l'utilisateur est une facturation terminée et que le type de test du montant de frais mensuels sélectionné par l'unité de sélection de type est un test continu ; et
une unité de test répété (122), configurée pour tester à plusieurs reprises le montant de frais de la précédente période de frais mensuels en fonction des données d'abonnement lorsque l'unité d'estimation de facturation (120) estime que l'état de facturation de la précédente période de frais mensuels de l'utilisateur est une facturation terminée et que le type de test du montant de frais mensuels sélectionné par l'unité de sélection de type (23) est un test répété.

7. Dispositif selon la revendication 6, comprenant en outre : une unité de traitement et d'estimation d'utilisateur (36), configurée pour estimer si les montants de frais mensuels de tous les utilisateurs qui sont abonnés au produit qui doit être payé sont testés, et, si ce n'est pas le cas, pour notifier à l'unité de sélection d'utilisateur (10) la sélection d'un autre utilisateur qui s'est abonné au produit qui doit être payé et pour notifier à l'unité d'obtention de données d'abonnement (11) l'obtention des données d'abonnement de l'autre utilisateur concernant le produit qui doit être payé.

8. Dispositif selon la revendication 6, comprenant en outre : une unité de traitement et d'évaluation de facturation mensuelle (34), configurée pour estimer si l'utilisateur est dans un test du montant de frais mensuels et, si ce n'est pas le cas, pour définir un état de test du montant de frais mensuels de l'utilisateur comme étant en cours de test et pour notifier à l'unité d'obtention de données d'abonnement (11) l'obtention des données d'abonnement de l'utilisateur.
